# DEMANDE DE BREVET EUROPEEN

(11) **EP 3 101 646 A1**
(43) Date de publication de la demande: **07.12.2016**
(21) Numéro de dépôt: 16172565.0
(22) Date de dépôt: 02.06.2016
(51) Int. Cl.: G09F 21/10, G09F 19/18

(54) **ENSEMBLE MOTEUR D'AÉRONEF POURVU D'UNE UNITÉ D'AFFICHAGE**

(30) Priorité: 05.06.2015 FR 1555115
(71) Demandeur: AIRBUS OPERATIONS (SAS), 31060 Toulouse (FR)
(72) Inventeur: PORTE, Alain, 31770 COLOMIERS (FR); Rehm, Wolfgang, 88138 Hergensweiler (DE); CHELIN, Frédéric, 32430 ENCAUSSE (FR); PAPIN, Nathalie, 31770 COLOMIERS (FR); MORENO GONZALEZ, Irene, 31100 TOULOUSE (FR)
(74) Mandataire: Gevers & Orès

(57) **Abrégé**

- Ensemble moteur d'aéronef pourvu d'une unité d'affichage.
- L'ensemble moteur (1) comporte un moteur (2) et une nacelle (3) entourant le moteur (2) qui est équipé, en amont dans le sens (E) d'entrée d'air dans le moteur (2), d'une soufflante (4) pourvue de pales (5), la nacelle (3) étant pourvue en amont d'une entrée d'air (6), l'ensemble moteur (1) comportant également une unité d'affichage (7) comprenant au moins un anneau lumineux (8) agencé dans l'entrée d'air (6) en amont de la soufflante (4), l'anneau lumineux (8) comprenant au moins une rangée de diodes électroluminescentes et étant configuré pour émettre au moins un faisceau lumineux (F1, F2, F3) et le projeter sur les pales (5) de la soufflante (4).

## Description

### DOMAINE TECHNIQUE

La présente invention concerne un ensemble moteur d'un aéronef pourvu d'une unité d'affichage, ledit ensemble moteur comprenant un moteur et une nacelle entourant le moteur.

### ÉTAT DE LA TECHNIQUE

Par le document FR - 3 002 360, on connaît un dispositif d'affichage d'images sur une partie externe d'un engin mobile, et notamment d'un aéronef. Ce dispositif d'affichage comporte au moins une source laser qui est apte à générer une lumière spatialement et temporellement cohérente et qui est configurée pour projeter au moins une image dynamique sur une partie externe de l'engin mobile, en particulier sur le fuselage d'un aéronef ou sur l'entrée d'air d'un moteur de l'aéronef. Dans le cas de l'affichage sur un moteur, on prévoit d'agencer la source laser sur le fuselage à proximité de la jonction avec l'aile. La source laser est ainsi éloignée du moteur et le faisceau laser émis peut être perturbé lors de son trajet.

Par le document FR - 2 982 736, on connaît un dispositif d'effarouchement visuel d'espèces aviaires comprenant une unité d'affichage permettant notamment de remédier en partie à cet inconvénient. Cette unité d'affichage comporte des moyens pour générer un signal visuel comprenant une image, de taille variable au cours du temps, qui simule une approche par une augmentation de la taille de l'image. Dans un mode de réalisation particulier, lesdits moyens génèrent un signal visuel représentant des yeux, en émettant des images au niveau des deux moteurs d'un aéronef bimoteur.

Pour ce faire, ce document FR - 2 982 736 prévoit notamment d'agencer, au niveau des entrées d'air ou des capots des moteurs, des équipements des moyens d'émission de signal visuel, qui sont formés de manière à projeter les images sur les aubes des moteurs.

Toutefois, ce document FR - 2 982 736 n'indique pas comment les moyens d'émission de signal visuel sont réalisés et agencés au niveau des entrées d'air ou des capots des moteurs.

Une telle réalisation et un tel agencement ne sont pas évidents à mettre en oeuvre, notamment pour être efficaces et optimaux relativement à l'utilisation envisagée. En effet, l'agencement doit tenir compte de la configuration de l'entrée d'air et du moteur et les moyens d'émission ne doivent pas devenir perturbateurs en particulier pour le flux d'air entrant par l'entrée d'air.

### EXPOSÉ DE L'INVENTION

La présente invention a pour objet de prévoir une réalisation et un agencement optimaux d'une unité d'affichage. Elle concerne un ensemble moteur comprenant un moteur et une nacelle entourant le moteur, le moteur étant équipé, en amont dans le sens d'entrée d'air dans le moteur, d'une soufflante pourvue de pales, ladite nacelle étant pourvue en amont d'une entrée d'air, ladite entrée d'air étant agencée en amont de la soufflante, l'ensemble moteur comportant au moins une unité d'affichage agencée dans l'entrée d'air.

Selon l'invention, ladite unité d'affichage comprend au moins un anneau lumineux agencé dans l'entrée d'air en amont de la soufflante, ledit anneau lumineux comprenant au moins une rangée de diodes électroluminescentes et étant configuré pour émettre au moins un faisceau lumineux et le projeter sur les pales de la soufflante.

Les diodes électroluminescentes, de type LED (« Light Emitting Diode » en anglais), sont ainsi positionnées en forme d'anneau(x) à l'intérieur de la nacelle de l'ensemble moteur et sont orientées de telle sorte que le faisceau lumineux généré illumine les pales de la soufflante (ou fan) et est renvoyé par ces pales vers l'avant du moteur.

Ainsi, grâce d'une part à la réalisation de l'unité d'affichage sous forme d'anneau lumineux agencé dans l'entrée d'air, ce qui permet de générer de façon efficace un affichage sur les pales de la soufflante, et grâce d'autre part à l'intégration de l'anneau lumineux à l'intérieur de l'entrée d'air de la nacelle, ce qui permet d'éviter une perturbation de flux, on obtient une réalisation optimale et un agencement optimal de l'unité d'affichage.

Selon différents modes de réalisation de l'invention, qui peuvent être pris ensemble ou séparément :
- chaque rangée de l'anneau lumineux comprend une pluralité d'unités optiques, chacune desdites unités optiques comprenant un groupe de diodes électroluminescentes ;
- chacune desdites unités optiques comprend au moins quatre diodes électroluminescentes ;
- chacune desdites unités optiques comprend une carte électronique commune, sur laquelle sont montées toutes les diodes électroluminescentes de l'unité optique correspondante ;
- chacune desdites unités optiques comprend une lentille configurée pour gérer l'orientation d'un faisceau lumineux émis par les diodes électroluminescentes de l'unité optique correspondante ;
- chacune desdites unités optiques comprend une unité de refroidissement.

Dans un premier mode de réalisation, l'unité d'affichage comprend au moins un anneau lumineux qui est agencé dans un panneau acoustique de l'entrée d'air.

En outre, dans un second mode de réalisation, l'unité d'affichage comprend deux anneaux lumineux agencés, respectivement, en amont et vers l'aval d'un panneau acoustique de l'entrée d'air.

Par ailleurs, de façon avantageuse, l'unité d'affichage comprend de plus :
- une unité de commande ;
- une source d'alimentation électrique de l'unité d'affichage ; et
- une unité d'activation permettant à un opérateur d'agir sur ladite unité de commande.

Par ailleurs, avantageusement, ledit ensemble moteur comporte au moins une fenêtre qui est transparente au faisceau lumineux émis par les diodes électroluminescentes, ladite fenêtre étant agencée sur une face externe de l'entrée d'air en regard de la soufflante du moteur, les diodes électroluminescentes étant agencées dans l'épaisseur de l'entrée d'air et configurées pour pouvoir émettre un faisceau lumineux à travers ladite fenêtre.

La présente invention concerne, en outre, un aéronef, en particulier un avion de transport, qui comporte au moins un ensemble moteur tel que celui précité.

Différentes applications sont possibles avec une unité d'affichage telle que décrite ci-dessus, et en particulier l'effarouchement d'oiseaux (au décollage et à l'atterrissage), l'affichage d'informations, l'identification d'aéronefs notamment par temps couvert, la détection de défauts sur les pales de la soufflante, ...

### BRÈVE DESCRIPTION DES FIGURES

Les figures annexées feront bien comprendre comment l'invention peut être réalisée. Sur ces figures, des références identiques désignent des éléments semblables.
Les figures 1 et 2 sont des coupes partielles schématiques d'un ensemble moteur comprenant un moteur et une nacelle, auquel est appliquée l'invention.
La figure 3 est le schéma synoptique d'un mode de réalisation d'une unité d'affichage, permettant d'illustrer l'invention.
La figure 4 montre schématiquement une carte électronique d'une unité optique, pourvue d'un groupe de diodes électroluminescentes.
Les figures 5 et 6 montrent schématiquement et partiellement, respectivement, des modes de réalisation différents d'une unité optique.

### DESCRIPTION DÉTAILLÉE

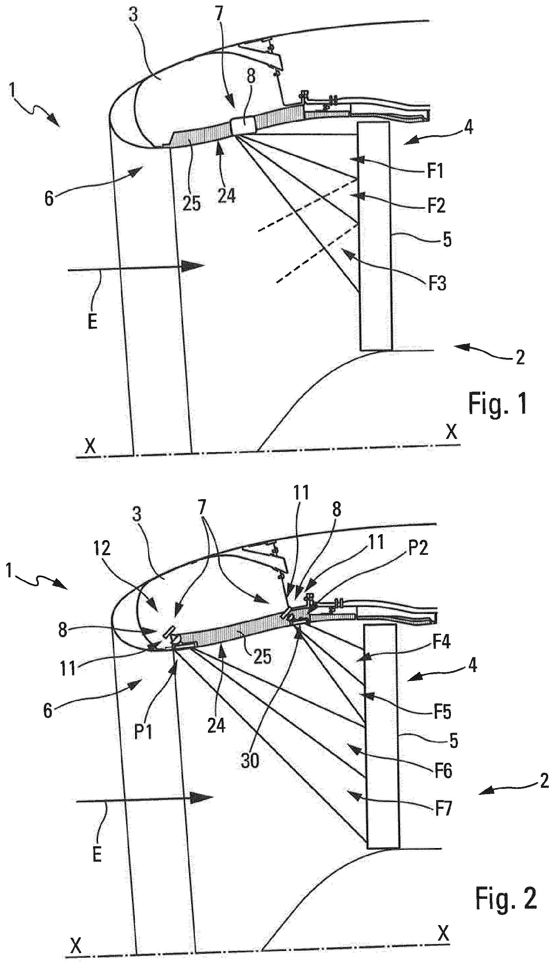

Les figures 1 et 2 montrent schématiquement et partiellement un ensemble moteur 1 d'un aéronef (non représenté), en particulier d'un avion de transport, illustrant l'invention. L'ensemble moteur 1 comprend, de façon usuelle, un moteur 2 et une nacelle 3 entourant le moteur 2.

Dans le cadre de la présente invention, les termes « amont » et « aval » sont définis par rapport au sens d'écoulement de l'air dans le moteur 2, qui est illustré par une flèche E sur les figures 1 et 2.

Le moteur 2 d'axe X-X est équipé, de façon usuelle, en amont, d'une soufflante 4 (ou fan) pourvue de pales 5, une seule pale 5 étant représentée dans la vue schématique partielle en coupe des figures 1 et 2. Les autres éléments du moteur 2 de type usuel, ne sont pas décrits davantage.

La nacelle 3 qui est, par exemple, destinée à être fixée sous une aile (non représentée) de l'aéronef, est pourvue en amont, de façon usuelle, comme représenté sur les figures 1 et 2, d'une entrée d'air 6. Cette entrée d'air 6 est positionnée en amont de la soufflante 4. L'air entre par cette entrée d'air 6 avant d'atteindre la soufflante du moteur 2, dans le sens indiqué par la flèche E.

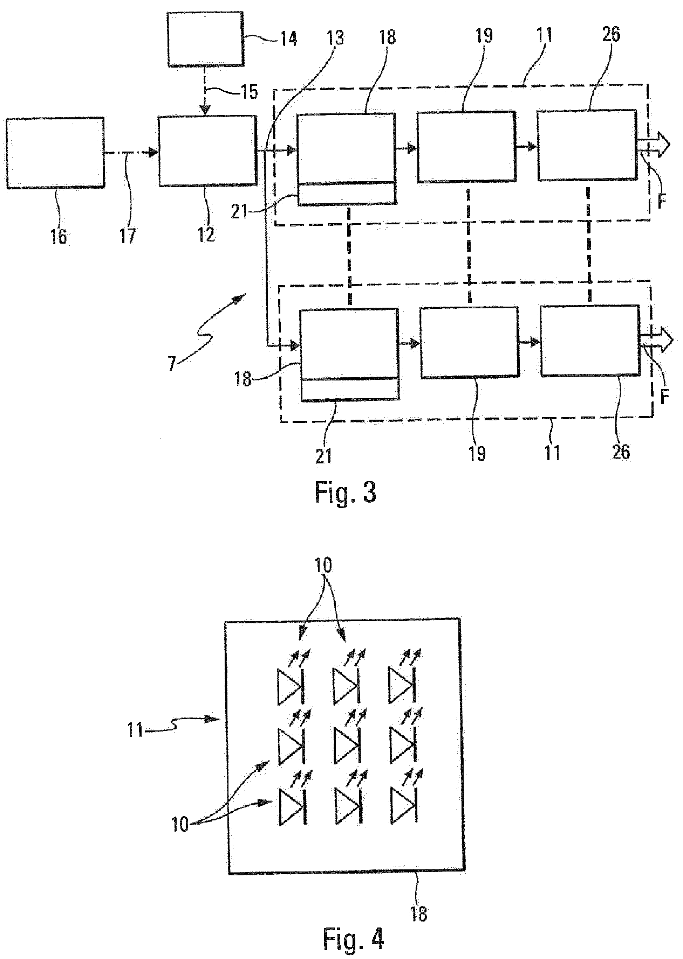

Selon l'invention :
- l'ensemble moteur 1 est pourvu d'une unité d'affichage 7 ;
- cette unité d'affichage 7 comprend au moins un anneau lumineux 8 agencé dans l'entrée d'air 6 en amont de la soufflante 4 ;
- l'anneau lumineux 8 comprend au moins une rangée de diodes électroluminescentes 10 (figure 4) et il est configuré pour émettre au moins un faisceau lumineux F1 à F3 (figure 1) et F4 à F7 (figure 2) et le projeter sur les pales 5 de la soufflante 4.

Chaque rangée d'un anneau lumineux 8 comprend une pluralité d'unités optiques 11. Chacune desdites unités optiques 11 comprend un groupe de diodes électroluminescentes 10.

Les diodes électroluminescentes 10, de type DEL (ou LED pour « Light-Emitting Diode » en anglais), sont ainsi positionnées en forme d'anneau(x) 8 à l'intérieur de la nacelle 3, et elles sont orientées de telle sorte que le faisceau lumineux F1 à F7 généré est dirigé sur les pales 5 de la soufflante 4 (ou fan). Ce faisceau lumineux F1 à F7 est renvoyé par ces pales 5 vers l'avant (en amont) du moteur 2 et donc de l'aéronef équipé dudit moteur 2, comme illustré en tirets pour le faisceau F2 de la figure 1 (et uniquement pour ce faisceau F2 pour ne pas surcharger la figure 1).

Ainsi, l'illumination et l'affichage réalisés sur les pales 5 de la soufflante du moteur 2 de l'aéronef, peuvent être vus par un être humain ou un animal, regardant les moteurs en étant situé sensiblement à l'avant de l'aéronef, ou être détectés par un dispositif de détection.

Bien entendu, la présente invention peut être appliquée à un seul moteur de l'aéronef ou à une pluralité de moteurs et notamment à l'ensemble des moteurs de l'aéronef.

Par ailleurs, l'unité d'affichage 7 comporte également, en plus de la pluralité d'unités optiques 11, comme représenté sur la figure 3 :
- une unité de commande 12 (ou microcontrôleur) qui est reliée par l'intermédiaire d'une liaison 13 aux unités optiques 11 et qui est destinée à commander ces unités optiques 11 ;
- une unité d'actionnement (ou d'activation) 14 qui est reliée, par l'intermédiaire d'une liaison 15 (qui est filaire (un signal de type onde ou électrique) ou non filaire (WiFi ou autre)), à l'unité de commande 12 et qui permet à un opérateur, en particulier au pilote de l'aéronef, d'agir sur ladite unité de commande 12 pour commander l'affichage ; et
- au moins une source d'alimentation électrique 16 de l'unité d'affichage 7 qui réalise une alimentation électrique, comme illustré très schématiquement par une flèche 17 en traits mixtes.

L'unité de commande 12 peut être localisée dans la structure de l'entrée d'air, à proximité des anneaux lumineux 8.

Quant à l'unité d'actionnement 14 qui est, de préférence, installée dans le poste de pilotage de l'aéronef, elle peut être de type mécanique, en comprenant par exemple des touches et/ou des boutons, et/ou de type électronique, en comprenant par exemple un pavé tactile et/ou des moyens usuels de déplacement de curseur. Cette unité d'actionnement 14 permet notamment à un opérateur, en fonction de l'application envisagée :
- d'allumer et d'éteindre l'unité d'affichage 7 ; et/ou
- de modifier les caractéristiques d'une image affichée via l'unité d'affichage 7, telles que sa taille ou sa fréquence d'affichage (si elle n'est pas affichée en permanence) ; et/ou
- de sélectionner une image à afficher, parmi des images prédéfinies.

En outre, ladite source d'alimentation électrique 16 peut être une source usuelle, existant déjà sur l'aéronef, ou bien une source dédiée.

Les anneaux lumineux 8 sont donc formés de rangées de diodes électroluminescentes groupées sur des unités optiques 11.

Chaque unité optique 11 comporte un groupe (ou « cluster ») de diodes électroluminescentes 10, comme représenté sur la figure 4, de préférence au moins quatre diodes électroluminescentes.

Dans le cas notamment de la diffusion d'une image pour effaroucher des oiseaux, tel que précisé ci-dessous, on prévoit, dans un mode de réalisation particulier, un minimum de neuf diodes électroluminescentes par unité optique 11, comme représenté dans l'exemple de la figure 4, afin d'obtenir une résolution optimale.

En outre, au sein d'une même unité optique 11, les différentes diodes électroluminescentes 10 sont associées sur une carte électronique 18 commune, de type PCB (pour « Printed Circuit Board » en anglais), comme montré sur cette figure 4.

Par ailleurs, comme représenté sur la figure 3, chaque unité optique 11 comprend une lentille 19 configurée pour gérer l'orientation d'un faisceau lumineux émis par les diodes électroluminescentes de l'unité optique 11, ainsi que d'autres propriétés optiques, par exemple l'augmentation de la taille de l'image ou la focalisation.

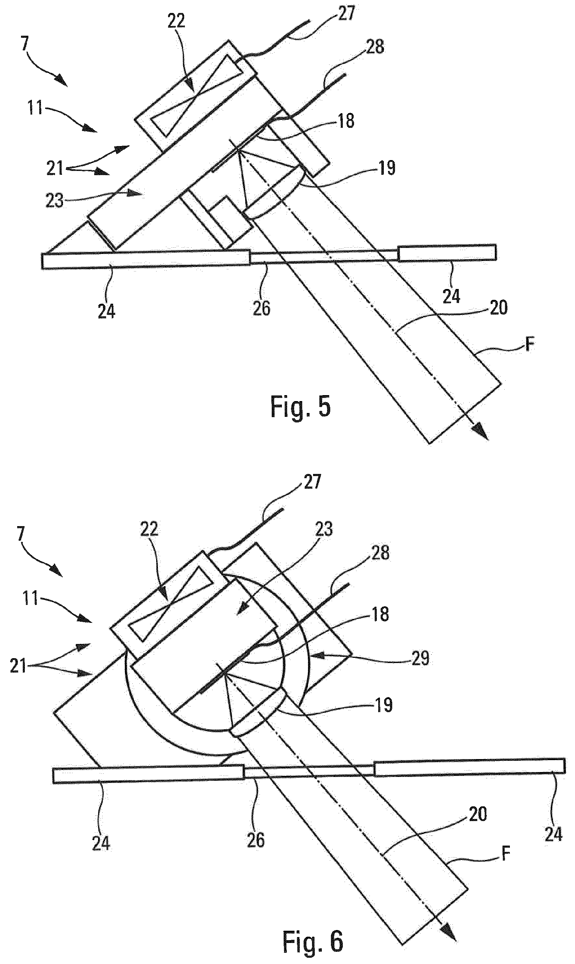

Dans les exemples des figures 5 et 6, la lentille 19 permet de modifier la direction 20 du faisceau lumineux F émis par les diodes électroluminescentes montées sur la carte électronique 18.

A titre d'illustration, l'angle d'incidence du faisceau lumineux F sur les pales peut être de 45° ± 15°.

Comme représenté sur les figures 3, 5 et 6, chaque unité optique 11 comporte également une unité de refroidissement 21.

Cette unité de refroidissement 21 peut comporter, comme illustré sur les figures 5 et 6, une soufflante de refroidissement 22 et un refroidisseur 23 usuel.

Sur ces figures 5 et 6, on a également représenté :
- la paroi 24 de la nacelle 6, par exemple au niveau d'un panneau acoustique 25 (figures 1 et 2) ;
- une fenêtre 26 à travers laquelle est émis le faisceau F. Cette fenêtre 26 est donc réalisée dans un matériau qui est transparent au moins à la longueur d'onde du ou des faisceaux émis par l'unité d'affichage 7 ; et
- des parties 27 et 28 de câbles destinés à l'alimentation électrique et reliés par exemple à la source d'alimentation électrique.

Par ailleurs, dans le mode de réalisation particulier de la figure 6, l'unité optique 11 est installée sur un élément sphérique 29 permettant un déplacement suivant deux axes.

Dans un premier mode de réalisation, illustré sur la figure 1, l'unité d'affichage 7 comprend un seul anneau lumineux 8 (représenté très schématiquement) qui est agencé dans un panneau acoustique 25 de l'entrée d'air 6. Le panneau acoustique 25 est formé, de façon usuelle, pour réduire le bruit généré par le moteur 2.

À titre d'illustration, dans le mode de réalisation de la figure 1, chaque unité optique de l'unité d'affichage 7 peut comporter 9 diodes électroluminescentes. Ces diodes, en l'occurrence 774, sont montées sur 86 unités optiques à 3 positions longitudinales (selon la direction définie par l'axe X-X) différentes. Trois faisceaux lumineux F1 à F3 sont émis par l'anneau lumineux 8 à partir, respectivement, de ces trois positions longitudinales. Dans cet exemple, l'anneau lumineux 8 peut comporter, à titre d'illustration :
- 41 unités optiques pour générer le faisceau F1 qui est radialement le plus externe sur la soufflante 4 par rapport à l'axe X-X ;
- 29 unités optiques pour générer le faisceau F2 central ; et
- 16 unités optiques pour générer le faisceau F3, qui est radialement le plus interne par rapport à l'axe X-X.

En outre, dans un second mode de réalisation, illustré sur la figure 2, l'unité d'affichage 7 comprend deux anneaux lumineux 8 agencés, respectivement, en amont et vers l'aval du panneau acoustique 25 de l'entrée d'air 6.

Un premier anneau lumineux 8 est positionné à l'extrémité amont P1 du panneau acoustique 25. Ce premier anneau lumineux 8 est représenté sur la figure 2 par le biais d'une unité optique 11 similaire à celle de la figure 5.

Le second anneau lumineux est positionné à une position P2 vers l'extrémité aval du panneau acoustique 25, dans ce dernier. Dans cet exemple également, l'anneau lumineux 8 (à la position P2) est représenté par le biais d'une unité optique 11 similaire à celle de la figure 5.

Par ailleurs, à titre d'illustration, dans ce mode de réalisation de la figure 2, chaque unité optique 11 peut comporter 9 diodes électroluminescentes. Ces diodes, en l'occurrence 918, sont montées sur 102 unités optiques à 4 positions longitudinales (selon la direction définie par l'axe X-X) différentes.

Si chaque position longitudinale comprend trois rangées (matrice 3x3 pour les 9 diodes électroluminescentes de chaque unité optique), ainsi on dispose de 12 rangées dans cet exemple.

Dans le mode de réalisation particulier, représenté sur la figure 2, quatre faisceaux lumineux F4 à F7 sont émis à partir, respectivement, de ces quatre positions longitudinales, à savoir les faisceaux F4 et F5 par l'anneau lumineux 8 positionné en P2 et les faisceaux F6 et F7 par l'anneau lumineux 8 positionné en P1.

À titre d'illustration, dans cet exemple, l'anneau lumineux 8 positionné en P2 peut comporter :
- 35 unités optiques pour générer le faisceau lumineux F4 ; et
- 29 unités optiques pour générer le faisceau lumineux F5.

De plus, l'anneau lumineux 8 positionné en P1 peut comporter :
- 23 unités optiques pour générer le faisceau lumineux F6 ; et
- 15 unités optiques pour générer le faisceau lumineux F7.

En variante, d'autres répartitions sont possibles. Par exemple, l'anneau lumineux 8 en P2 peut être configuré pour générer uniquement le faisceau lumineux F4, alors que l'anneau lumineux 8 en P1 peut être configuré pour générer les trois faisceaux lumineux F5, F6 et F7.

Dans une variante de réalisation (non représentée) du second mode de réalisation, l'anneau aval est positionné sur la structure du moteur 2 (et non pas dans le panneau acoustique 25 comme sur l'exemple de la figure 2) selon les caractéristiques du moteur 2. La structure du moteur 2 avance, en effet, plus ou moins dans l'entrée d'air 6. Cette variante de réalisation permet de maintenir l'intégrité du panneau acoustique 25 et donc de ses fonctions.

Par ailleurs, ledit ensemble moteur 1 comporte au moins une fenêtre 26 qui est transparente au faisceau lumineux F émis par les diodes électroluminescentes de l'unité d'affichage 7 (figures 5 et 6). La ou les fenêtres sont agencées sur une face externe 30 de la structure de l'entrée d'air 6, sur sa périphérie interne en regard de la soufflante 4 du moteur 2, comme représenté pour l'anneau 8 aval sur la figure 2. Les diodes électroluminescentes sont agencées dans l'épaisseur de l'entrée d'air 6, par exemple dans le panneau acoustique 25, et elles sont configurées pour pouvoir émettre un faisceau lumineux à travers ladite ou les fenêtres transparentes.

Dans un mode de réalisation particulier, la fenêtre est réalisée en plastique (en polycarbonate) et le reste de la structure de l'unité d'affichage 7 est principalement réalisé en aluminium.

Dans un premier mode de réalisation, l'engin moteur 1 comporte une fenêtre continue le long du panneau acoustique, destinée à l'ensemble des diodes de l'unité d'affichage.

En outre, dans un second mode de réalisation, l'engin moteur 1 comporte plusieurs fenêtres avec maintien de la structure du panneau acoustique entre les fenêtres.

L'unité d'affichage 7, telle que décrite ci-dessus, peut être utilisée dans de nombreuses applications sur un aéronef.

Dans une première application, ladite unité d'affichage 7 est destinée à l'effarouchement visuel d'espèces animales et notamment d'espèces aviaires.

Dans ce cas, le pilote peut déclencher l'unité d'affichage 7 à l'aide de l'unité d'actionnement 14 qui est prévue dans le poste de pilotage, avant de décoller ou à l'approche d'un aéroport, pour lequel un risque aviaire est suspecté. Un tel système d'effarouchement embarqué est notamment efficace dans les phases proches du sol : en phase de roulage, au décollage, en montée, à l'approche et à l'atterrissage.

La diffusion ou l'affichage de signaux visuels d'effarouchement durant la phase de roulage au sol, permet en premier lieu de sécuriser la piste avant le décollage, en réduisant et minimisant les risques de collisions. En outre, la diffusion des signaux visuels d'effarouchement durant les phases initiale de décollage et finale d'atterrissage (au-dessous de 1500 pieds) permet de limiter les collisions dans ces phases de vol présentant les risques principaux de collisions.

En phase de croisière, le pilote peut également activer l'unité d'affichage 7 lorsqu'un risque aviaire est signalé (en période de migration par exemple).

Dans une deuxième application, ladite unité d'affichage 7 est destinée à afficher des informations (sous forme de logos, dessins, ...) ou une signalisation, sur un moteur 2 de l'aéronef.

Dans ce cas, l'unité d'affichage 7 peut être utilisée pour afficher, par exemple, des informations publicitaires avec la diffusion de tout type de message publicitaire visuel. Elle peut également être utilisée pour afficher des informations d'identification de l'aéronef, ou bien de la compagnie aérienne qui affrète l'aéronef.

Par ailleurs, dans une troisième application, l'unité d'affichage 7 est utilisée pour surveiller les pales 5 de la soufflante 4 du moteur 2 et est associée à des moyens permettant de détecter des défauts sur les pales 5 suite à l'illumination de ces dernières par l'unité d'affichage 7.

## Revendications

1. Ensemble moteur comprenant un moteur et une nacelle entourant le moteur, le moteur (2) étant équipé, en amont dans le sens (E) d'entrée d'air dans le moteur (2), d'une soufflante (4) pourvue de pales (5), ladite nacelle (3) étant pourvue en amont d'une entrée d'air (6), ladite entrée d'air (6) étant agencée en amont de la soufflante (4), l'ensemble moteur (1) comportant au moins une unité d'affichage (7) agencée dans l'entrée d'air (6),
**caractérisé en ce que** ladite unité d'affichage (7) comprend au moins un anneau lumineux (8) agencé dans l'entrée d'air (6) en amont de la soufflante (4), ledit anneau lumineux (8) comprenant au moins une rangée de diodes électroluminescentes (10) et étant configuré pour émettre au moins un faisceau lumineux (F, F1 à F7) et le projeter sur les pales (5) de la soufflante (4).

2. Ensemble moteur selon la revendication 1,
**caractérisé en ce que** chaque rangée de l'anneau lumineux (8) comprend une pluralité d'unités optiques (11), chacune desdites unités optiques (11) comprenant un groupe de diodes électroluminescentes (10).

3. Ensemble moteur selon la revendication 2,
**caractérisé en ce que** chacune desdites unités optiques (11) comprend une carte électronique (18) commune, sur laquelle sont montées toutes les diodes électroluminescentes (10) de l'unité optique (11) correspondante.

4. Ensemble moteur selon l'une des revendications 2 et 3,
**caractérisé en ce que** chacune desdites unités optiques (11) comprend une lentille (19) configurée pour gérer l'orientation d'un faisceau lumineux (F) émis par les diodes électroluminescentes (10) de l'unité optique (11) correspondante.

5. Ensemble moteur selon l'une quelconque des revendications 2 à 4,
**caractérisé en ce que** chacune desdites unités optiques (11) comprend une unité de refroidissement (21).

6. Ensemble moteur selon l'une quelconque des revendications 2 à 5,
**caractérisé en ce que** chacune desdites unités optiques (11) comprend au moins quatre diodes électroluminescentes (10).

7. Ensemble moteur selon l'une quelconque des revendications 1 à 6,
**caractérisé en ce que** l'unité d'affichage (7) comprend au moins un anneau lumineux (8) qui est agencé dans un panneau acoustique (25) de l'entrée d'air (6).

8. Ensemble moteur selon l'une quelconque des revendications 1 à 6, **caractérisé en ce que** l'unité d'affichage (7) comprend deux anneaux lumineux (8) agencés, respectivement, en amont et vers l'aval d'un panneau acoustique (25) de l'entrée d'air (6).

9. Ensemble moteur selon l'une quelconque des revendications précédentes,
**caractérisé en ce que** l'unité d'affichage (7) comprend de plus :
- une unité de commande (12) ;
- une source (16) d'alimentation électrique de l'unité d'affichage (7) ;
- une unité (14) d'actionnement permettant à un opérateur d'agir sur ladite unité de commande (12).

10. Ensemble moteur selon l'une quelconque des revendications précédentes,
**caractérisé en ce que** ledit ensemble moteur (1) comporte au moins une fenêtre (26) qui est transparente au faisceau lumineux (F) émis par les diodes électroluminescentes (10), ladite fenêtre (26) étant agencée sur une face externe (30) de l'entrée d'air (6) en regard de la soufflante (4) du moteur (2), les diodes électroluminescentes (10) étant agencées dans l'épaisseur de l'entrée d'air (6) et configurées pour pouvoir émettre un faisceau lumineux (F) à travers ladite fenêtre (26).

11. Aéronef,
**caractérisé en ce qu'**il comporte au moins un ensemble moteur (1) selon l'une quelconque des revendications 1 à 10.
